# FASCICULE DE BREVET EUROPEEN

(11) **EP 4 269 695 B1**
(45) Date de publication et mention de la délivrance du brevet: **11.03.2026**
(21) Numéro de dépôt: 23170148.3
(22) Date de dépôt: 26.04.2023
(51) Int. Cl.: E02B 17/02, B63B 35/00, B66C 1/10, E02D 13/04, B63B 21/00, E02B 17/00

(54) **SYSTÈME DE MAINTIEN TEMPORAIRE, POUR LE MAINTIEN TEMPORAIRE, AU COURS DES OPÉRATIONS DE BATTAGE, D'UN PIEU DE FONDATION DESTINÉ À RECEVOIR LE MAT D'UNE ÉOLIENNE OFF-SHORE**
TEMPORÄRES RÜCKHALTESYSTEM ZUR VORÜBERGEHENDEN HALTERUNG WÄHREND DES DRESCHVORGANGS, EINES GRÜNDUNGSPFAHLS ZUR AUFNAHME DES MASTS EINER OFF-SHORE-WINDTURBINE
TEMPORARY SUPPORT SYSTEM FOR TEMPORARILY HOLDING A FOUNDATION PILE FOR RECEIVING THE MAST OF AN OFF-SHORE WIND TURBINE DURING DRIVING OPERATIONS

(30) Priorité: 29.04.2022 FR 2204072
(43) Date de publication de la demande: 01.11.2023
(73) Titulaire: REEL, 69450 Saint-Cyr au Mont d'Or (FR)
(72) Inventeur: KONATE, Karamoko, 17220 Saint Rogatien (FR); MILLS, Stephen, 17137 L'Houmeau (FR)
(74) Mandataire: Jacobacci Coralis Harle

(56) Documents cités:
- EP-A1- 4 208 607
- WO-A1-2022/229436
- WO-A1-2022/229455
- US-A1- 2020 347 960

## Description

### Domaine technique de l'invention

La présente invention concerne le domaine technique des équipements pour la pose des éoliennes off-shore et en particulier des pieux de fondation.

Elle concerne en particulier les systèmes pour le maintien temporaire, au cours des opérations de battage, d'un pieu de fondation destiné à recevoir le mat d'une éolienne off-shore.

Un système comparable est décrit dans le document JPH0925630.

### Etat de la technique

Les éoliennes sont des dispositifs qui transforment l'énergie cinétique du vent en énergie électrique.

Elles sont constituées d'un mât (ou tour) portant une nacelle dans laquelle est destiné à tourner un rotor portant des pâles. Au sein de la nacelle, un générateur transforme l'énergie cinétique du rotor en énergie électrique.

A titre indicatif, les éoliennes de 8 MW ont un mat qui peut atteindre 140 mètres de haut, avec un rotor de 164 mètres de diamètre. Il est même envisagé des projets de grandes éoliennes dont la puissance serait comprise entre 10 et 15 MW, avec en corollaire des dimensions encore accrues.

Une implantation précise de la fondation de ces éoliennes constitue un point majeur, ce d'autant plus dans le cas d'éoliennes en mer.

Ces fondations reprennent en effet l'ensemble des charges associées aux poids des équipements (éoliennes) et aux forces s'y appliquant (vent, courant etc.).

Certaines fondations se présentent sous la forme d'un pieu de fondation, dit encore « monopieu ».

L'ancrage dans le sol d'un tel pieu de fondation est alors avantageusement obtenu par des opérations de battage.

Pour cela, le pieu de fondation est positionné au-dessus de son point d'ancrage puis battu dans le sol marin à l'aide d'un équipement de battage (par exemple un marteau hydraulique) jusqu'à la profondeur adaptée.

La mise en œuvre de ces opérations de battage peut être délicate. Il convient en effet de maintenir l'ensemble pieu de fondation / équipement de battage à la verticale du point d'ancrage tout au long du battage.

A cet effet, l'engin de pose est généralement équipé d'un système de maintien temporaire pour le maintien temporaire, au cours des opérations de battage, du pieu de fondation destiné à recevoir le mat d'une éolienne off-shore.

Un tel système de maintien temporaire comprend pour cela :
- un manchon destiné à ceinturer un tronçon du pieu de fondation, et
- un châssis porteur, formant une interface entre ce manchon et l'engin flottant.

Le manchon est avantageusement manœuvrable entre deux configurations, à savoir une configuration fermée pour délimiter un conduit traversant, et une configuration ouverte pour libérer une ouverture latérale adaptée au passage du pieu de fondation.

Mais, en pratique, du fait de ses dimensions, la manœuvre du pieu de fondation au travers de l'ouverture latérale, depuis l'espace de stockage sur l'engin, est souvent délicate.

Il est alors généralement envisagé de mettre en œuvre des manchons présentant une ouverture latérale ajustable. Mais, à cet effet, la structure des manchons est souvent relativement complexe.

En outre, l'engin de pose est avantageusement équipé de moyens de positionnement dynamique ou « DP » (système contrôlé par ordinateur qui permet à un navire de maintenir sa position en utilisant ses propres moyens de propulsion).

Or, ce positionnement dynamique peut être insuffisant pour compenser le mouvement relatif du navire, notamment en en lacet, par rapport à la position de pose recherchée et par rapport au pieu de fondation en cours de battage.

La pose d'un parc éolienne nécessite alors une solution efficace pour optimiser le maintien temporaire des pieux de fondation au cours des opérations de battage.

### Présentation de l'invention

Afin de remédier à l'inconvénient précité de l'état de la technique, la présente invention propose un système de maintien temporaire, pour le maintien temporaire, au cours des opérations de battage, d'un pieu de fondation destiné à recevoir le mat d'une éolienne off-shore, tel que défini dans la revendication 1.

Le système de maintien temporaire comprend :
- un manchon délimitant un conduit traversant, destiné à ceinturer un tronçon dudit pieu de fondation et définissant un axe longitudinal, avantageusement un axe longitudinal vertical, et
- un châssis porteur comprenant un module d'interface qui porte ledit manchon, et une embase qui est destinée à être solidarisée avec un engin flottant.

Le manchon comprend :
- une section primaire, assemblée avec ledit module d'interface, et
- au moins une section secondaire, portée par ladite section primaire et manœuvrable en rotation entre deux configurations : une configuration fermée pour délimiter ledit conduit traversant, et une configuration ouverte pour libérer une ouverture latérale adaptée au passage dudit pieu de fondation.

Et selon l'invention, ledit module d'interface et ladite section primaire sont assemblés par le biais de moyens paliers destinés à conférer un degré de liberté en rotation audit manchon par rapport audit module d'interface, selon un axe de rotation s'étendant coaxialement audit axe longitudinal.

Et ledit système de maintien temporaire comprend des moyens de manœuvre en rotation, adaptés à manœuvrer en rotation ledit manchon selon ledit axe de rotation, lesquels moyens paliers comprennent au moins un palier comprenant un roulement à contact qui comporte des éléments roulants, et un chemin de roulement, lisse, centré sur ledit axe de rotation, lesquels éléments roulants consistent en des rouleaux cylindriques, répartis sur au moins une rangée.

Un tel système de maintien temporaire offre ainsi, par une structure optimisée, une orientation efficace de l'ouverture latérale du manchon.

Cette structure facilite la manœuvre du pieu de fondation au travers de l'ouverture latérale, depuis l'espace de stockage sur l'engin.

De plus, elle offre avantageusement une composante supplémentaire dans le positionnement dynamique, pour compenser le mouvement relatif du navire, notamment en lacet, par rapport à la position de pose recherchée et par rapport au pieu de fondation en cours de battage.

Elle permet également de manœuvrer en rotation le pieu de fondation, de sorte à lui conférer une bonne orientation avant le contact avec le sol marin.

D'autres caractéristiques non limitatives et avantageuses du produit conforme à l'invention, prises individuellement ou selon toutes les combinaisons techniquement possibles, sont les suivantes :
- la section primaire s'étend sur un secteur angulaire allant de 150° à 250° autour dudit axe longitudinal ; les moyens paliers sont agencés pour autoriser une manœuvre en rotation dudit manchon sur un secteur angulaire d'au moins 90° de part et d'autre d'un axe médian passant par ledit axe longitudinal ; le module d'interface s'étend avantageusement sur un secteur angulaire allant de 20° à 50° de part et d'autre d'un axe médian passant par l'axe longitudinal.
- les moyens paliers comprennent au moins un palier radial, de préférence vertical, destiné à recevoir les efforts radiaux s'étendent radialement par rapport audit axe de rotation, et au moins un palier axial, de préférence horizontal, destiné à recevoir les efforts axiaux s'étendant parallèlement audit axe de rotation ; de préférence, les moyens paliers comprennent au moins deux paliers radiaux : au moins un premier palier radial agencé pour recevoir les efforts axiaux centrifuges, et au moins un second palier radial agencé pour recevoir les efforts axiaux centripètes ; de préférence encore, ledit au moins un palier axial est interposé entre lesdits au moins deux paliers radiaux ;
- les moyens de manœuvre en rotation comprennent au moins un couple pignon / crémaillère : au moins un organe moteur équipé d'un pignon, avantageusement porté par le module d'interface, et au moins une crémaillère, en arc de cercle, avantageusement portée par la section primaire du manchon ; de préférence, les moyens de manœuvre en rotation comprennent au moins deux couples pignon / crémaillère, de préférence de part et d'autre de la section primaire du manchon.

D'autres caractéristiques non limitatives et avantageuses de ce mode de réalisation préféré conforme à l'invention, prises individuellement ou selon toutes les combinaisons techniquement possibles, sont les suivantes :
- ledit au moins un palier radial comprend un roulement à contact radial qui comporte des éléments roulants, et un chemin de roulement en arc de cercle, lisse, coaxial et parallèle audit axe de rotation, et ledit au moins un palier axial comprend un roulement à contact axial qui comporte des éléments roulants, et un chemin de roulement en arc de cercle, lisse, coaxial et perpendiculaire audit axe de rotation ;
- de préférence, les rouleaux cylindriques sont reliés pour former au moins une chaîne de rouleaux cylindriques ;
- ledit au moins un palier comporte plusieurs modules de roulement comportant chacun au moins une chaîne de rouleaux cylindriques ; et au sein de chaque module de roulement, la chaîne de rouleaux cylindriques forme une chaîne de rouleaux cylindriques recirculant qui comporte un brin actif coopérant avec le chemin de roulement, et un brin retour ; les modules de roulement sont répartis sur une partie de la circonférence de l'axe de rotation ;
- les éléments roulants sont portés par le module d'interface, et le chemin de roulement est porté par la section primaire du manchon.

La présente invention concerne également l'engin flottant, comportant :
- un système de maintien temporaire selon l'invention et
- un système de battage dudit pieu de fondation maintenu dans ledit système de maintien temporaire.

La présente invention concerne également le procédé pour le maintien temporaire, au cours des opérations de battage, d'un pieu de fondation destiné à recevoir le mat d'une éolienne off-shore par la mise en œuvre d'un système de maintien temporaire selon l'invention.

Le procédé de maintien comprend une étape de mise en place dudit pieu de fondation au sein du conduit traversant dudit manchon.

Cette étape de mise en place comprend :
- une opération de manœuvre en rotation de ladite au moins une section secondaire dans ladite configuration ouverte, et
- une opération de manœuvre en rotation dudit manchon par rapport au module d'interface, tenant compte de l'orientation souhaitée pour ladite ouverture latérale et avantageusement pour corriger les éventuels mouvements de lacet de l'engin flottant.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale et partielle d'un engin flottant selon l'invention, illustrant son système de maintien temporaire assurant le maintien d'un pieu de fondation ;
[Fig. 2] est une vue générale et de dessus de l'engin flottant selon la figure 1 ;
[Fig. 3] est une vue isolée et de dessus du système de maintien temporaire, montrant en particulier son manchon en configuration fermée, porté par son module d'interface ;
[Fig. 4] est une vue schématique de la figure 3, illustrant son manchon en configuration ouverte et suite à un mouvement de rotation pour orienter latéralement le passage radial autorisant l'entrée/la sortie du pieu de fondation ;
[Fig. 5] est une vue schématique et partielle du système de maintien temporaire, selon un plan de coupe axial, montrant l'agencement des moyens paliers ;
[Fig. 6] est une vue schématique et isolée, en perspective, d'un élément roulant constitutif des moyens paliers ;
[Fig. 7] est une vue schématique et isolée, en perspective, d'un élément roulant qui est adapté à coopérer avec un chemin de roulement en arc de cercle, lisse, coaxial et perpendiculaire à l'axe de rotation ;
[Fig. 8] est une vue schématique et isolée, en coupe, d'un élément roulant qui est adapté à coopérer avec un chemin de roulement en arc de cercle convexe, lisse, coaxial et parallèle audit axe de rotation ;
[Fig. 9] est une vue schématique et isolée, en coupe, d'un élément roulant qui est adapté à coopérer avec un chemin de roulement en arc de cercle concave, lisse, coaxial et parallèle audit axe de rotation ;
[Fig. 10] représente, en détails, l'un de ces segments d'appui.

Il est à noter que, sur ces figures, les éléments structurels et/ou fonctionnels communs aux différentes variantes peuvent présenter les mêmes références.

Le système de maintien temporaire 1, décrit ci-après en relation avec les figures, consiste en un système pour le maintien temporaire d'un pieu de fondation E destiné à recevoir le mat d'une éolienne off-shore (non représentée).

De manière générale, une éolienne comprend avantageusement trois parties principales :
- un mât,
- une nacelle positionnée au sommet du mât, et
- un rotor composé de trois pales insérées sur un moyeu.

Une éolienne off-shore, ou « éolienne en mer », est destinée à être implantée sur une fondation qui est ancrée dans le fond marin.

Dans une telle éolienne off-shore, l'énergie électrique est avantageusement transmise au pied de la tour où elle est adaptée par un convertisseur et un transformateur, de sorte à être exportée vers un poste électrique en mer via des câbles inter-éoliennes.

Le mât de l'éolienne off-shore est rapporté ici sur un pieu de fondation E, dit encore « monopieu » ou, en anglais « pile » ou « monopile », destiné à être implanté dans le fond marin par des opérations de battage.

Le mât est généralement relié à ce pieu de fondation E par l'intermédiaire d'une jointure surmontée par une pièce de transition.

Le système de maintien temporaire 1 est en particulier adapté à maintenir ce pieu de fondation E au cours des opérations de battage.

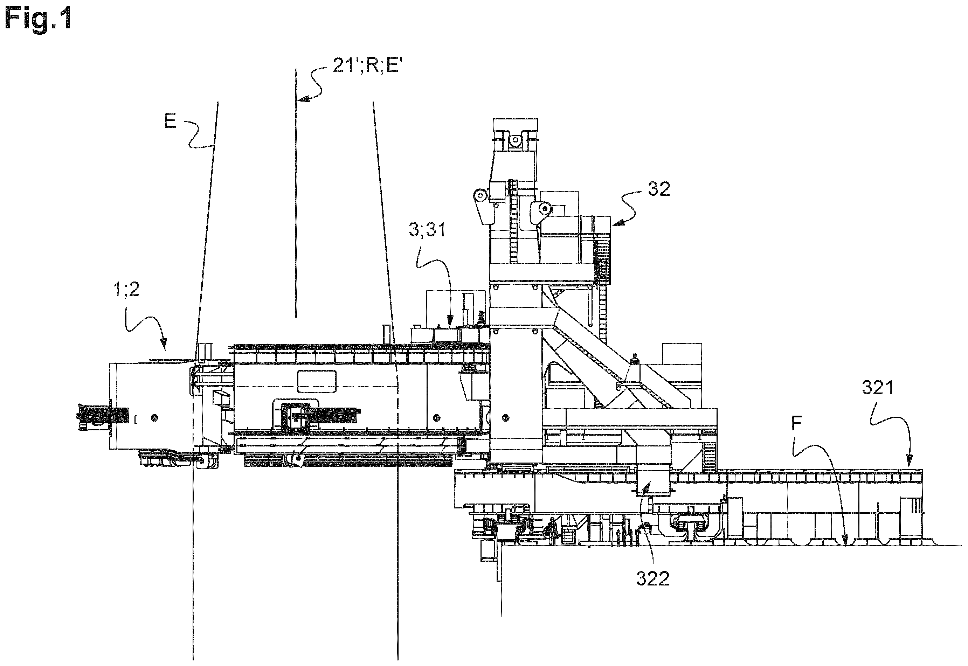

Pour cela, ce système de maintien temporaire 1 est avantageusement destiné à équiper un engin flottant F (illustré très partiellement et schématiquement sur la figure 1) qui est adapté à la pose des pieux de fondation E par battage, voire aussi la pose des éoliennes off-shore sur les pieux de fondation E installés.

De préférence, un tel engin flottant F comporte :
- un système de maintien temporaire 1 selon l'invention, équipant avantageusement son pont,
- un système de battage (non représenté), pour le battage dudit pieu de fondation E maintenu dans le système de maintien temporaire 1, et
- de préférence des moyens de positionnement dynamique ou « DP », classiques en soi (système contrôlé par ordinateur qui permet à un navire de maintenir sa position en utilisant ses propres moyens de propulsion).

Le système de battage, par exemple un marteau hydraulique, est destiné à surmonter le pieu de fondation E maintenu par le système de maintien temporaire 1 et à impacter axialement l'extrémité supérieure libre de ce pieu de fondation E pour assurer son ancrage dans le sol.

Un tel pieu de fondation E, généralement réalisé en acier, est maintenu et guidé verticalement par le système de maintien temporaire 1 au cours de son ancrage dans le sol par enfoncement grâce aux opérations de battage.

Selon l'invention et de manière générale, le système de maintien temporaire 1 comprend :
- un manchon 2 destiné à ceinturer un tronçon du pieu de fondation E, et
- un châssis porteur 3, ménagé entre le manchon 2 et l'engin flottant F.

Tel que développé par la suite, le manchon 2 est manœuvrable en rotation par rapport au châssis porteur 3, selon un axe de rotation R qui s'étend coaxialement à l'axe longitudinal 21' du manchon 2.

### Manchon

Le manchon 2 est avantageusement destiné à ceinturer / enserrer un tronçon du pieu de fondation E et à maintenir l'axe longitudinal E' de ce pieu de fondation E selon une orientation verticale et avantageusement selon une géolocalisation déterminée.

Pour cela, le manchon 2 délimite un conduit traversant 21, destiné à ceinturer un tronçon du pieu de fondation E.

Ce conduit traversant 21 définit un axe longitudinal 21' (dit encore axe longitudinal du manchon 2), avantageusement un axe longitudinal 21' vertical.

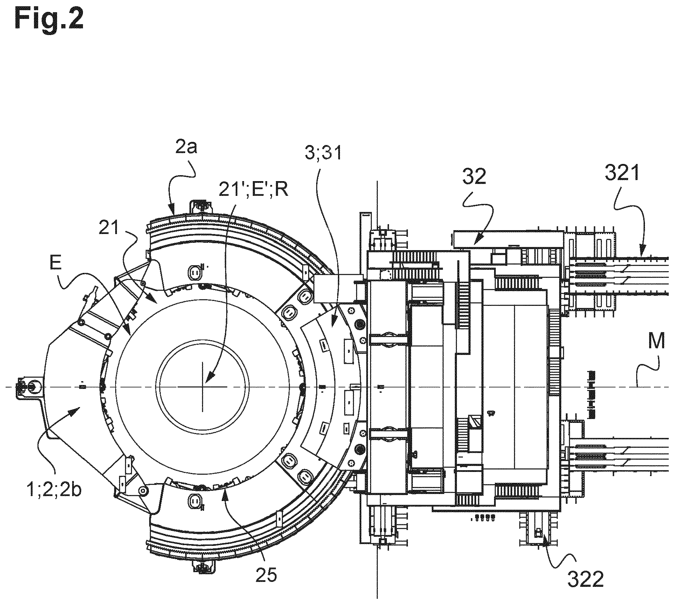

Le manchon 2 comporte encore avantageusement un axe médian M, passant par l'axe longitudinal 21' et perpendiculairement à cet axe longitudinal 21' (figures 2 à 4). Cet axe longitudinal 21' passe encore avantageusement par le châssis porteur 3.

De manière générale, le manchon 2 comprend :
- une section primaire 2a (ou portion primaire), assemblée avec le châssis porteur 3 (via un module d'interface 31 décrit par la suite), et
- au moins une section secondaire 2b (ou portion secondaire), portée par la section primaire 2a et manœuvrable en rotation par rapport à cette section primaire 2a.

Les sections 2a, 2b du manchon 2 sont avantageusement en forme générale d'arc de cercle et en série.

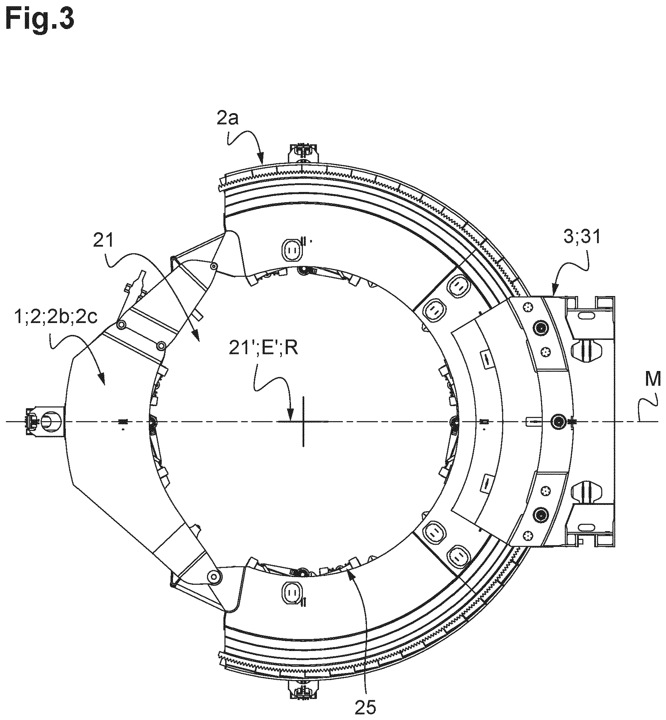

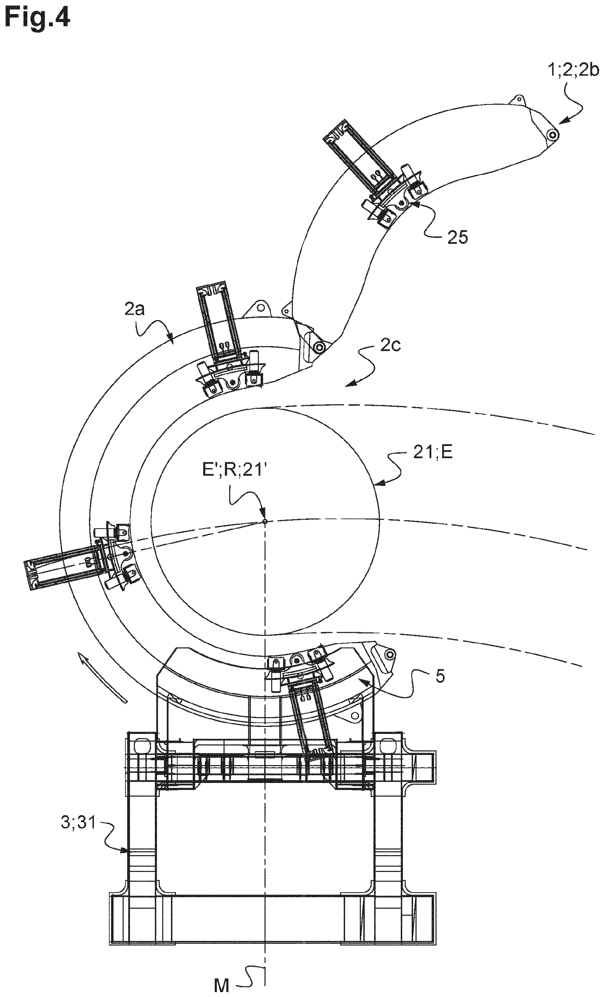

En particulier, ladite au moins une section secondaire 2b est manœuvrable entre deux configurations :
- une configuration fermée (figures 2 et 3), pour délimiter le conduit traversant 21, et
- une configuration ouverte (figure 4), pour libérer une ouverture latérale 2c adaptée au passage du pieu de fondation E (vers le conduit traversant 21 ou hors du conduit traversant 21), par exemple au moyen d'une grue de manœuvre.

Ladite au moins une section secondaire 2b est avantageusement manœuvrable selon un degré de liberté en rotation qui est parallèle à l'axe longitudinal 21' du manchon 2.

Par « ouverture latérale 2c », on entend avantageusement une ouverture radiale par rapport l'axe longitudinal 21' du manchon 2.

En d'autres termes, dans la configuration fermée, le manchon 2 définit avantageusement un anneau continu ; le conduit traversant 21 est fermé sur sa circonférence ; il débouche au-dessus et au-dessous du conduit traversant 21.

Et dans la configuration ouverte, le manchon 2 définit avantageusement un anneau discontinu, interrompu par l'ouverture latérale 2c.

Encore de manière générale, le manchon 2 comporte avantageusement des segments d'appui 25, destinés à prendre appui sur le tronçon du pieu de fondation E.

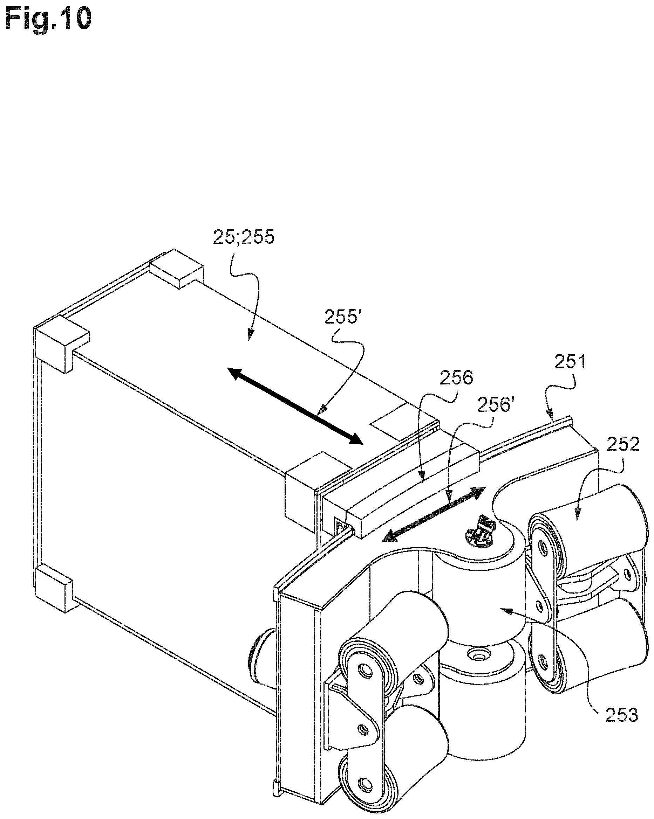

L'un de ces segments d'appui 25 est illustré par en détails sur la figure 10.

Les segments d'appui 25, par exemple au nombre de au moins quatre, sont répartis sur la circonférence de l'axe longitudinal 21' du conduit traversant 21 et comprennent chacun une tête d'appui 251.

Pour coopérer avec le tronçon du pieu de fondation E, la tête d'appui 251 comporte avantageusement un combinaison de rouleaux 252, 253, à savoir :
- des premiers rouleaux 252 orientés perpendiculairement à l'axe longitudinal 21' du manchon 2, avantageusement libre en rotation, pour maintenir un contact lors d'un déplacement relatif en translation du pieu de fondation E par rapport au manchon 2, et éventuellement
- des seconds rouleaux 253 orientés parallèlement à l'axe longitudinal 21' du manchon 2, avantageusement motorisés, pour piloter un déplacement relatif en rotation entre le pieu de fondation E et le manchon 2.

Les premier rouleaux 252 sont en particulier destinés à cheminer sur la longueur du pieu de fondation E lors des opérations de battage et aussi pour compenser les mouvements verticaux de l'engin flottant F.

Les seconds rouleaux 253 sont utiles pour manœuvrer le pieu de fondation E autour de son axe longitudinal avant la pose au sol.

De préférence, les premiers rouleaux 252 et/ou les seconds rouleaux 253 coopèrent avec des moyens de manœuvre (non représentés) entre une position escamotée / une position déployée.

Ces moyens de manœuvre, par exemple une motorisation électrique, sont utiles pour positionner, alternativement, les premiers rouleaux 252 et les seconds rouleaux 253 en contact avec le pieu de fondation E.

Encore de préférence, un segment d'appui 25 comporte des moyens de manœuvre complémentaires, à savoir :
- des moyens de manœuvre 255 en translation de sa tête d'appui 251, selon un axe de translation radial 255' radial par rapport à l'axe longitudinal 21' du manchon 2, et/ou
- des moyens de manœuvre 256 en rotation de sa tête d'appui 251, selon une trajectoire en arc de cercle 256' dont le centre correspond à l'axe longitudinal 21' du manchon 2.

Les moyens de manœuvre 255 en translation consistent par exemple des vérins électriques ou des vérins hydrauliques. Ils sont utiles pour ajuster la tête d'appui 251 en fonction du diamètre du pieu de fondation E et pour tenir compte des éventuelles variations de diamètre de ce dernier lors des opérations de battage.

Les moyens de manœuvre 256 en rotation consistent par exemple en un système de glissière associé à un couple pignon / couronne. Ils sont utiles pour suivre le mouvement en lacet de l'engin flottant F autour de l'axe longitudinal E' du pieu de fondation E pendant le battage, ou encore pour la manœuvre en rotation du manchon 2 autour de son axe de rotation R, tout en maintenant le contact des premiers rouleaux 252 avec ce pieu de fondation E.

### Châssis porteur

Le châssis porteur 3 comprend :
- un module d'interface 31 qui porte le manchon 2 et en particulier sa section primaire 2a, et
- une embase 32 qui est destinée à être solidarisée avec l'engin flottant F.

De préférence, l'embase 32 est adaptée à piloter le manchon 2 selon deux degrés de liberté en translation (avantageusement en X-Y) qui sont perpendiculaires à l'axe longitudinal 21' de son conduit traversant 21 (avantageusement en Z).

Le châssis porteur 3 vise ainsi à maintenir une géolocalisation déterminée du manchon 2, tout au long des opérations de battage.

A cet effet, tel que représenté schématiquement sur la figure 1, l'embase 32 comprend par exemple :
- des moyens glissières 321, définissant les deux degrés de liberté en translation entre le manchon 2 (avec son module d'interface 31) et l'embase 32, et
- des moyens de manœuvre 322, destinés à générer des déplacements du manchon 2 (avec son module d'interface 31) par rapport à l'engin flottant F, selon les deux degrés de liberté en translation.

### Moyens paliers

Selon l'invention, le manchon 2 présente un degré de liberté en rotation par rapport audit module d'interface 31. Ce degré de liberté en rotation est défini selon un axe de rotation R qui s'étend coaxialement à l'axe longitudinal 21' du manchon 2.

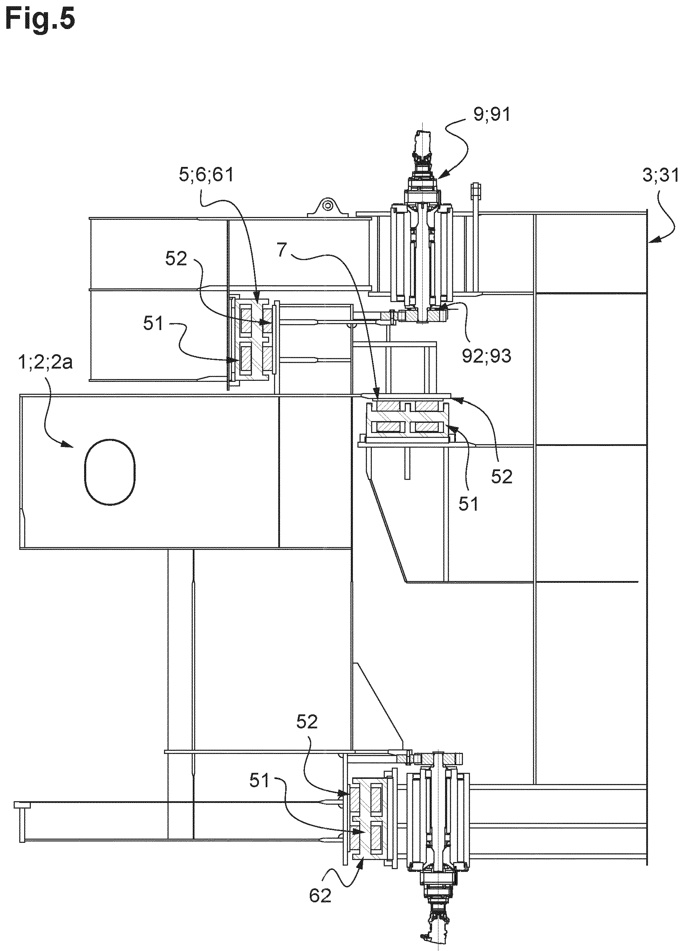

Pour cela, tel que représenté schématiquement sur les figures 4 et 5, le module d'interface 31 et la section primaire 2a du manchon 2 sont assemblés par le biais de moyens paliers 5 qui sont destinés à conférer ce degré de liberté en rotation audit manchon 2 par rapport audit module d'interface 31.

Et le système de maintien temporaire 1 comprend des moyens de manœuvre en rotation 9, adaptés à manœuvrer en rotation le manchon 2 selon l'axe de rotation R précité.

En d'autres termes, tel qu'illustré sur la figure 4, le manchon 2 est avantageusement mobile en rotation selon l'axe de rotation R, de sorte que ladite au moins une section secondaire 2b et son ouverture latérale 2c associée sont manœuvrables autour de l'axe de rotation R, au moins d'un côté de l'axe médian M, avantageusement de part et d'autre de l'axe médian M.

Encore en d'autres termes, la section primaire 2a du manchon 2 est destinée à cheminer en translation par rapport au module d'interface 31 (selon une course en arc de cercle).

De manière générale, la section primaire 2a s'étend avantageusement sur un secteur angulaire allant de 150° à 250° autour de l'axe longitudinal 21'.

Les moyens paliers 5 sont de préférence agencés pour autoriser une manœuvre en rotation du manchon 2 (dite encore une « course en rotation ») sur un secteur angulaire d'au moins 90° de part et d'autre de l'axe médian M.

En d'autres termes, le manchon 2 est avantageusement mobile entre deux positions de fin de course en rotation (figure 4), avantageusement symétriques de part et d'autre de l'axe médian M, dans lesquelles l'ouverture latérale 2c est avantageusement à l'équerre par rapport à l'axe médian M.

Et ces positions de fin de course en rotation s'étendent avantageusement depuis une position angulaire nominale dans laquelle l'ouverture latérale 2c est traversée par l'axe médian M, avantageusement à l'opposé du module d'interface 31 (figure 3).

Par ailleurs, le module d'interface 31 s'étend avantageusement sur un secteur angulaire allant de 20° à 50° de part et d'autre de l'axe médian M.

Selon une forme de réalisation préférée, décrite ci-dessous en lien avec la figure 5, les moyens paliers 5 comprennent une combinaison de paliers 5 :
- au moins un palier radial 6, de préférence vertical, destiné à recevoir les efforts radiaux s'étendant radialement par rapport à l'axe de rotation R (c'est-à-dire encore les efforts s'étendant perpendiculairement par rapport à l'axe de rotation R), et
- au moins un palier axial 7, de préférence horizontal, destiné à recevoir les efforts axiaux s'étendant parallèlement audit axe de rotation R.

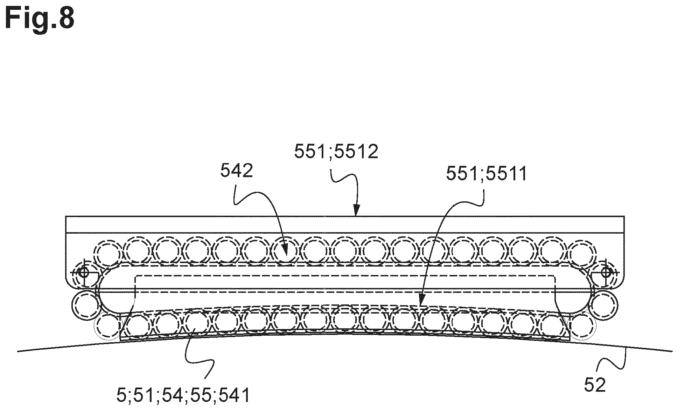

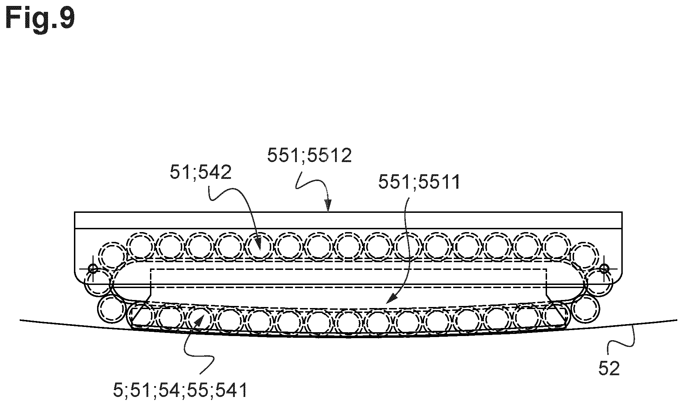

De préférence encore, les moyens paliers 5 comprennent ici au moins deux paliers radiaux 6, complémentaires, à savoir :
- au moins un premier palier radial 61, illustré encore figure 8, agencé pour recevoir les efforts axiaux centrifuges (c'est-à-dire les efforts s'étendant perpendiculairement par rapport à l'axe de rotation R et dans un sens opposé à l'axe de rotation R), et
- au moins un second palier radial 62, illustré encore figure 9, agencé pour recevoir les efforts axiaux centripètes (c'est-à-dire encore les efforts s'étendant perpendiculairement par rapport à l'axe de rotation R et dans un sens orienté vers l'axe de rotation R).

Les paliers radiaux 61, 62 sont avantageusement répartis au niveau des faces supérieure et inférieure du manchon 2.

Cette combinaison permet avantageusement un maintien optimal du manchon 2 et un guidage optimal du manchon 2 autour de son axe de rotation R.

Par ailleurs, ledit au moins un palier axial 7 est de préférence destiné à recevoir les efforts verticaux, correspondant à la force verticale d'appui du manchon 2 sur le module d'interface 31.

En l'espèce, ledit au moins un palier axial 7 est ici avantageusement interposé entre lesdits au moins deux paliers radiaux 6, avantageusement dans le but de reprendre la charge verticale du manchon 2.

De manière générale, selon l'invention, ledit au moins un palier 5 comprend avantageusement un roulement à contact qui comporte :
- des éléments roulants 51, et
- un chemin de roulement 52, lisse, centré sur l'axe de rotation R.

Dans ce cadre, d'une part, tel qu'illustré sur les figures 8 et 9, ledit au moins un palier radial 6 comprend avantageusement un roulement à contact radial qui comporte :
- des éléments roulants 51, et
- un chemin de roulement 52 en arc de cercle, lisse, coaxial et parallèle à l'axe de rotation R.

Le chemin de roulement 52 en arc de cercle de ce palier radial 6 consiste ainsi avantageusement en un tronçon tubulaire, à section en arc de cercle, adapté à servir de surface de roulement pour les éléments roulants 51 lors de la rotation du manchon 2 par rapport au module d'interface 31.

Ce chemin de roulement cylindrique 52 est avantageusement coaxial et parallèle à l'axe de rotation 21' du manchon 2.

Et, d'autre part, ledit au moins un palier axial 7 comprend avantageusement un roulement à contact axial qui comporte :
- des éléments roulants 51, et
- un chemin de roulement 52 en arc de cercle, lisse, coaxial et perpendiculaire à l'axe de rotation R.

Le chemin de roulement cylindrique 52 de ce palier axial 7 consiste ainsi avantageusement en une portion de couronne, adaptée à servir de surface de roulement pour les éléments roulants 51 lors de la rotation du manchon 2 par rapport au module d'interface 31.

Ce chemin de roulement cylindrique 52 est avantageusement coaxial et perpendiculaire à l'axe de rotation 21' du manchon 2.

De manière générale et l'espèce, les éléments roulants 51 consistent avantageusement en des rouleaux cylindriques 51, répartis sur au moins une rangée.

En l'espèce, ledit au moins un palier radial 6 comporte avantageusement deux rangées superposées de rouleaux cylindriques 51. Et ledit au moins un palier axial 7 comporte avantageusement deux rangées concentriques de rouleaux cylindriques 51.

Chaque rouleaux cylindrique 51 comporte ici un axe longitudinal 51', définissant son axe de rotation.

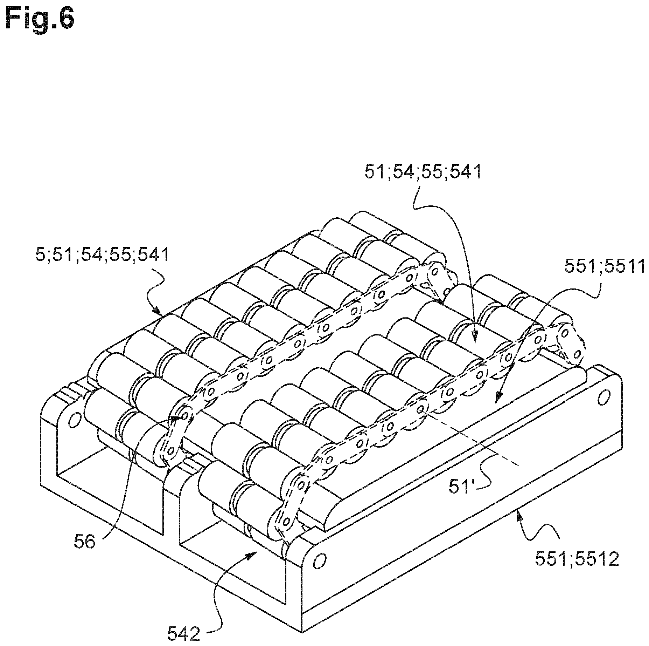

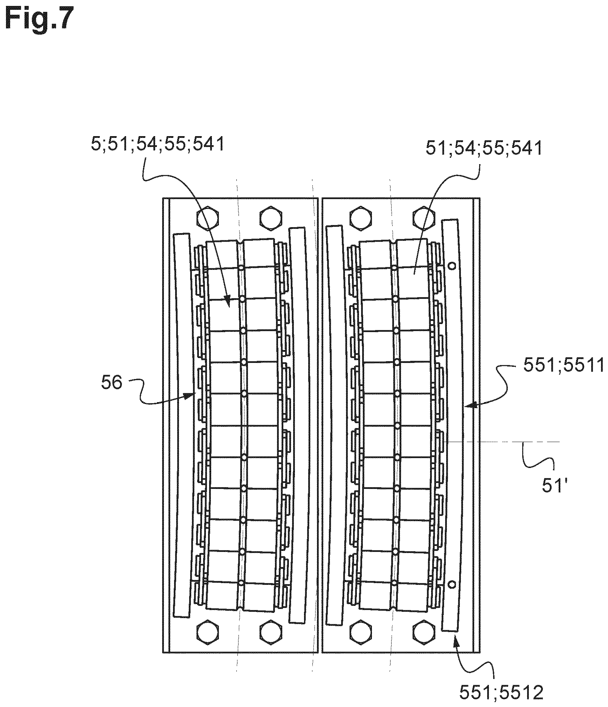

Sur une rangée, ces rouleaux cylindriques 51 sont reliés, avantageusement par le biais de maillons 56, pour former au moins une chaîne 54 de rouleaux cylindriques 51 (voir notamment les figures 6 et 7).

En particulier, au sein d'un palier radial 6, l'axe longitudinal 51' des rouleaux cylindrique 51 s'étend avantageusement parallèlement à l'axe de rotation R du manchon 2.

Une rangée de rouleaux cylindriques 51 s'étend avantageusement dans un plan perpendiculaire à l'axe de rotation R.

De manière alternative, au sein d'un palier axial 7, l'axe longitudinal 51' des rouleaux cylindrique 51 s'étend avantageusement perpendiculairement à l'axe de rotation R du manchon 2 et radialement par rapport à cet axe de rotation R du manchon 2.

Une rangée de rouleaux cylindriques 51 s'étend avantageusement dans un cercle concentrique à l'axe de rotation R.

De préférence encore, ledit au moins un palier 5 comporte plusieurs modules de roulement 55 comportant chacun au moins une chaîne 54 de rouleaux cylindriques 51.

Au sein d'une chaîne 54, ces rouleaux cylindriques 51 sont avantageusement reliés par des maillons 56 pour maintenir l'écartement entre les rouleaux cylindriques 51 successifs (figure 6).

Les maillons 56 sont en plus avantageusement agencés, entre deux rouleaux cylindriques 51 successifs, pour conférer un jeu en rotation entre deux rouleaux cylindriques 51 successifs.

Au niveau dudit au moins un palier axial 7, les axes longitudinal 51' des rouleaux cylindriques 51 sont avantageusement convergeant au niveau de l'axe longitudinal 21' du manchon 2.

Les axes longitudinal 51' des rouleaux cylindriques 51 se croisent avantageusement au niveau de l'axe longitudinal 21' du manchon 2.

Un tel agencement est en particulier intéressant pour ledit au moins un palier axial 7, de sorte à autoriser un roulement sur un chemin de roulement en portion de couronne (figure 7).

De manière générale, les modules de roulement 55 sont répartis sur une partie de la circonférence de l'axe de rotation R.

De préférence encore, les éléments roulants 51 sont portés par le module d'interface 31. Et le chemin de roulement 52 est porté par la section primaire 2a du manchon 2.

Dans ce cadre, le module d'interface 31 comporte avantageusement au moins deux éléments roulants 51, appartenant respectivement audit au moins un palier radial 6 et audit au moins un palier axial 7.

Parallèlement, la section primaire 2a du manchon comporte avantageusement au moins deux chemins de roulement 52, appartenant respectivement audit au moins un palier radial 6 et audit au moins un palier axial 7.

De préférence encore, tel que représenté sur la figure 8, les éléments roulants 51 du premier palier radial 61 définissent avantageusement ensemble une surface tangentielle concave, extérieure, orientée vers l'axe de rotation R. Et le chemin de roulement 52 complémentaire consiste ainsi avantageusement en une portion de couronne convexe, intérieure, orientée à l'opposé de l'axe de rotation R.

De préférence encore, tel que représenté sur la figure 9, les éléments roulants 51 du second palier radial 62 définissent avantageusement ensemble une surface tangentielle convexe, intérieure, orientée à l'opposé de l'axe de rotation R. Et le chemin de roulement 52 complémentaire consiste ainsi avantageusement en une portion de couronne concave, extérieure, orientée vers l'axe de rotation R.

De préférence encore, les éléments roulants 51 du palier axial 7 définissent avantageusement ensemble une surface en couronne, inférieure, orientée vers le haut. Et le chemin de roulement 52 complémentaire consiste ainsi avantageusement en une portion de couronne, supérieure, orientée vers le bas.

Encore de manière générale, tel que représenté sur la figure 6 notamment, au sein de chaque module de roulement 55, la chaîne 54 de rouleaux cylindriques 51 forme une chaîne 54 de rouleaux cylindriques 51 recirculant qui comporte :
- un brin actif 541 coopérant avec le chemin de roulement 52, et
- un brin retour 542.

En l'espèce, le brin actif 541 définit une surface tangentielle présentant une section en arc de cercle dont le rayon de courbure correspond au chemin de roulement cylindrique 52 complémentaire.

Le brin retour 542 est quant à lui avantageusement rectiligne.

Pour cela, le module de roulement 55 comporte avantageusement un châssis support 551 comportant deux parties :
- une partie guidage 5511, guidant de la chaîne 55 de rouleaux cylindriques 10 recirculant et définissant la forme des brins de la chaîne de rouleaux cylindriques 10 recirculant, et
- une partie montage 5512, adaptée à son montage sur la structure support 3.

Les modules de roulement 55 sont répartis, en série, sur une partie de la circonférence de l'axe de rotation 21' et/ou au moins une partie de la longueur de la section primaire 2a, de manière juxtaposée les uns par rapport aux autres.

Les brins actifs 541 des modules de roulement 55 définissent ainsi ensemble une surface tangentielle en arc de cercle dont le rayon de courbure correspond au chemin de roulement cylindrique 52 complémentaire.

En d'autres termes encore, les brins actifs 541 des modules de roulement 55 définissent ensemble une surface tangentielle en arc de cercle qui est concentrique avec l'axe de rotation R du manchon 2.

De manière alternative, les éléments roulants 51 peuvent être choisis avantageusement parmi une série de roues (non représentées), par exemple sous forme de chariots ou de bogies.

### Moyens de manœuvre en rotation

Tel que représenté sur la figure 5, les moyens de manœuvre en rotation 9 comprennent de préférence au moins un couple pignon / crémaillère, avec :
- au moins un organe moteur 91 équipé d'un pignon 92, avantageusement porté par le module d'interface 31, et
- au moins une crémaillère 93, en arc de cercle, avantageusement portée par la section primaire 2a du manchon 2.

Les moyens de manœuvre en rotation 9 comprennent avantageusement au moins deux couples pignon 92 / crémaillère 93, de préférence de part et d'autre de la section primaire 2a du manchon 2.

### Procédé pour le maintien temporaire au cours des opérations de battage

Au cours des opérations de battage, le système de maintien temporaire 1 selon l'invention est mis en œuvre pour le maintien temporaire d'un pieu de fondation E destiné à recevoir le mat d'une éolienne off-shore.

Le procédé de maintien comprend une étape de mise en place du pieu de fondation E au sein du conduit traversant 21 dudit manchon 2.

Tel que représentée sur la figure 5, cette étape de mise en place comprend :
- une opération de manœuvre en rotation de ladite au moins une section secondaire 2b dans la configuration ouverte, et
- une opération de manœuvre en rotation du manchon 2 par rapport au module d'interface 31, autour de son axe de rotation R, tenant compte de l'orientation souhaitée pour l'ouverture latérale 2c et avantageusement pour corriger les éventuels mouvements de lacet de l'engin flottant F.

Le manchon 2 peut ainsi être manœuvré en rotation en direction d'au moins un côté de l'axe médian M, dans un sens horaire (figure 4) et/ou dans un sens anti-horaire (non représenté) depuis la position angulaire nominale (figure 3).

Une fois le pieu de fondation E mis en place, une opération de manœuvre en rotation de ladite au moins une section secondaire 2b est mise en œuvre, dans la configuration fermée ; et le manchon 2 est avantageusement manœuvré en rotation autour de son axe de rotation R de sorte à ramener celui-ci dans sa position angulaire nominale (figure 3).

Lors de cette manœuvre en rotation, les segments d'appui 25 sont déployés et cheminement avantageusement sur le tronçon en regard du pieu de fondation E.

Au cours des opérations de battage, le manchon 2 est avantageusement manœuvré en rotation par rapport au module d'interface 31, autour de son axe de rotation R, pour corriger les éventuels mouvements de lacet de l'engin flottant F.

Bien entendu, diverses autres modifications peuvent être apportées à l'invention dans le cadre des revendications annexées.

## Revendications

1. Système de maintien temporaire, pour le maintien temporaire, au cours des opérations de battage, d'un pieu de fondation (E) destiné à recevoir le mat d'une éolienne off-shore,
lequel système de maintien temporaire (1) comprend :
- un manchon (2) délimitant un conduit traversant (21), destiné à ceinturer un tronçon dudit pieu de fondation (E) et définissant un axe longitudinal (21'), avantageusement un axe longitudinal (21') vertical, et
- un châssis porteur (3) comprenant un module d'interface (31) qui porte ledit manchon (2), et une embase (32) qui est destinée à être solidarisée avec un engin flottant,
lequel manchon (2) comprend :
- une section primaire (2a), assemblée avec ledit module d'interface (31), et
- au moins une section secondaire (2b), portée par ladite section primaire (2a) et manœuvrable en rotation entre deux configurations : une configuration fermée pour délimiter ledit conduit traversant (21), et une configuration ouverte pour libérer une ouverture latérale (2c) adaptée au passage dudit pieu de fondation (E),
- ledit module d'interface (31) et ladite section primaire (2a) sont assemblés par le biais de moyens paliers (5) destinés à conférer un degré de liberté en rotation audit manchon (2) par rapport audit module d'interface (31), selon un axe de rotation (R) s'étendant coaxialement audit axe longitudinal (21'),
- ledit système de maintien temporaire (1) comprend des moyens de manœuvre en rotation (9), adaptés à manœuvrer en rotation ledit manchon (2) selon ledit axe de rotation (R), **caractérisé en ce que**
lesquels moyens paliers (5) comprennent au moins un palier (6, 7) comprenant un roulement à contact qui comporte :
- des éléments roulants (51), et
- un chemin de roulement (52), lisse, centré sur ledit axe de rotation (R),
lesquels éléments roulants (51) consistent en des rouleaux cylindriques (51), répartis sur au moins une rangée.

2. Système de maintien temporaire, selon la revendication 1, **caractérisé en ce que** la section primaire (2a) s'étend sur un secteur angulaire allant de 150° à 250° autour dudit axe longitudinal (21'),
**en ce que** les moyens paliers (5) sont agencés pour autoriser une manœuvre en rotation dudit manchon (2) sur un secteur angulaire d'au moins 90° de part et d'autre d'un axe médian (M) passant par ledit axe longitudinal (21').

3. Système de maintien temporaire, selon l'une quelconque des revendications 1 ou 2, **caractérisé en ce que** les moyens paliers (5) comprennent :
- au moins un palier radial (6), de préférence vertical, destiné à recevoir les efforts radiaux s'étendent radialement par rapport audit axe de rotation (R), et
- au moins un palier axial (7), de préférence horizontal, destiné à recevoir les efforts axiaux s'étendant parallèlement audit axe de rotation (R).

4. Système de maintien temporaire, selon la revendication 3, **caractérisé en ce que** les moyens paliers (5) comprennent au moins deux paliers radiaux (6) :
- au moins un premier palier radial (61) agencé pour recevoir les efforts axiaux centrifuges, et
- au moins un second palier radial (62) agencé pour recevoir les efforts axiaux centripètes.

5. Système de maintien temporaire, selon la revendication 4, **caractérisé en ce que** ledit au moins un palier radial (6) comprend un roulement à contact radial qui comporte :
- des éléments roulants (51), et
- un chemin de roulement (52) en arc de cercle, lisse, coaxial et parallèle audit axe de rotation (R),
et en ce ledit au moins un palier axial (7) comprend un roulement à contact axial qui comporte :
- des éléments roulants (51), et
- un chemin de roulement (52) en arc de cercle, lisse, coaxial et perpendiculaire audit axe de rotation (R).

6. Système de maintien temporaire, selon l'une quelconque des revendications 1 à 5, **caractérisé en ce que** les rouleaux cylindriques (51) sont reliés pour former au moins une chaîne (54) de rouleaux cylindriques (51).

7. Système de maintien temporaire, selon la revendication 6, **caractérisé en ce que** ledit au moins un palier (6, 7) comporte plusieurs modules de roulement (55) comportant chacun au moins une chaîne (54) de rouleaux cylindriques (51),
**en ce que**, au sein de chaque module de roulement (55), la chaîne (54) de rouleaux cylindriques (51) forme une chaîne (54) de rouleaux cylindriques (51) recirculant qui comporte :
- un brin actif (541) coopérant avec le chemin de roulement (52), et
- un brin retour (542),
lesquels modules de roulement (55) sont répartis sur une partie de la circonférence de l'axe de rotation (R).

8. Système de maintien temporaire, selon l'une quelconque des revendications 1 à 7, **caractérisé en ce que** les éléments roulants (51) sont portés par le module d'interface (31), et
**en ce que** le chemin de roulement (52) est porté par la section primaire (2a) du manchon (2).

9. Engin flottant, comportant :
- un système de maintien temporaire (1) selon l'une quelconque des revendications 1 à 8 et
- un système de battage dudit pieu de fondation E maintenu dans ledit système de maintien temporaire (1).

10. Procédé pour le maintien temporaire, au cours des opérations de battage, d'un pieu de fondation (E) destiné à recevoir le mat d'une éolienne off-shore par la mise en œuvre d'un système de maintien temporaire (1) selon l'une quelconque des revendications 1 à 8,
lequel procédé de maintien comprend une étape de mise en place dudit pieu de fondation (E) au sein du conduit traversant (21) dudit manchon (2),
laquelle étape de mise en place comprend :
- une opération de manœuvre en rotation de ladite au moins une section secondaire (2b) dans ladite configuration ouverte, et
- une opération de manœuvre en rotation dudit manchon (2) par rapport au module d'interface (31), tenant compte de l'orientation souhaitée pour ladite ouverture latérale (2c) et avantageusement pour corriger les éventuels mouvements de lacet de l'engin flottant.

## Patentansprüche

1. Temporäres Haltesystem zum temporären Halten eines zur Aufnahme des Masts einer Off-Shore-Windturbine bestimmten Grundpfahls (E),
wobei das temporäre Haltesystem (1)
- eine Hülse (2), die eine Durchgangsleitung (21) begrenzt, dazu bestimmt ist, einen Abschnitt des Grundpfahls (E) zu umgeben, und eine Längsachse (21'), vorzugsweise eine senkrechte Längsachse (21'), definiert, und
- einen Tragrahmen (3) mit einem Verbindungsmodul (31), das die Hülse (2) trägt, und einem Sockel (32), der dazu bestimmt ist, mit einer schwimmenden Maschine verbunden zu werden,
aufweist,
wobei die Hülse (2)
- einen mit dem Verbindungsmodul (31) zusammengebauten ersten Abschnitt (2a) und
- mindestens einen zweiten Abschnitt (2b), der vom ersten Abschnitt (2a) getragen wird und zwischen zwei Konfigurationen gedreht werden kann: einer geschlossenen Konfiguration, um die Durchgangsleitung (21) abzugrenzen, und einer offenen Konfiguration, um eine zum Hindurchführen des Grundpfahls (E) ausgelegte seitliche Öffnung (2c) freizugeben,
aufweist,
- wobei das Verbindungsmodul (31) und der erste Abschnitt (2a) mittels Lagermitteln (5) zusammengebaut sind, die dazu bestimmt sind, der Hülse (2) einen Freiheitsgrad für das Drehen gegenüber dem Verbindungsmodul (31) um eine sich koaxial zur Längsachse (21') erstreckende Drehachse (R) zu geben,
- wobei das temporäre Haltesystem (1) Drehbetätigungsmittel (9) aufweist, die dazu ausgelegt sind, die Hülse (2) um die Drehachse (R) zu drehen,
**dadurch gekennzeichnet, daß**
die Lagermittel (5) mindestens ein Lager (6, 7) mit einem Wälzlager aufweisen, das
- rollende Elemente (51) und
- einen glatten, auf die Drehachse (R) zentrierten Rollweg (52)
aufweist,
wobei die rollenden Elemente (51) aus zylindrischen Rollen (51) bestehen, die auf mindestens eine Reihe verteilt sind.

2. Temporäres Haltesystem gemäß Anspruch 1, **dadurch gekennzeichnet,**
**daß** sich der erste Abschnitt (2a) über einen Winkelbereich erstreckt, der von 150° bis 250° um die Längsachse (21') reicht,
**daß** die Lagermittel (5) so angeordnet sind, daß sie ein Drehen der Hülse (2) über einen Winkelbereich von mindestens 90° nach beiden Seiten einer durch die Längsachse (21') gehenden Mittelachse (M) ermöglichen.

3. Temporäres Haltesystem gemäß einem der Ansprüche 1 oder 2, **dadurch gekennzeichnet, daß** die Lagermittel (5)
- mindestens ein vorzugsweise vertikales Radiallager (6), das dazu bestimmt ist, die sich radial zur Drehachse (R) erstreckenden Radialkräfte aufzunehmen, und
- mindestens ein vorzugsweise horizontales Axiallager (7), das dazu bestimmt ist, die sich parallel zur Drehachse (R) erstreckenden Axialkräfte aufzunehmen,
aufweisen.

4. Temporäres Haltesystem gemäß Anspruch 3, **dadurch gekennzeichnet, daß** die Lagermittel (5) mindestens zwei Radiallager (6) aufweisen:
- mindestens ein erstes Radiallager (61), das zum Aufnehmen der zentrifugalen Axialkräfte ausgelegt ist, und
- mindestens ein zweites Radiallager (62), das zum Aufnehmen der zentripetalen Axialkräfte ausgelegt ist.

5. Temporäres Haltesystem gemäß Anspruch 4, **dadurch gekennzeichnet, daß** das mindestens eine Radiallager (6) ein radiales Wälzlager aufweist, das
- rollende Elemente (51) und
- einen glatten, koaxialen und zur Drehachse (R) parallelen kreisbogenförmigen Rollweg (52)
aufweist,
und daß das mindestens eine Axiallager (7) ein axiales Wälzlager aufweist, das
- rollende Elemente (51) und
- einen glatten, koaxialen und zur Drehachse (R) senkrechten kreisbogenförmigen Rollweg (52)
aufweist.

6. Temporäres Haltesystem gemäß einem der Ansprüche 1 bis 5, **dadurch gekennzeichnet, daß** die zylindrischen Rollen (51) verbunden sind, um mindestens eine Kette (54) aus zylindrischen Rollen (51) zu bilden.

7. Temporäres Haltesystem gemäß Anspruch 6, **dadurch gekennzeichnet, daß** das mindestens eine Lager (6, 7) mehrere Rollmodule (55) aufweist, von denen jedes mindestens eine Kette (54) aus zylindrischen Rollen (51) aufweist,
daß die Kette (54) aus zylindrischen Rollen (51) bei jedem Rollmodul (55) eine Kette (54) aus umlaufenden zylindrischen Rollen (51) bildet, die
- einen mit dem Rollweg (52) zusammenwirkenden aktiven Zweig (541) und
- einen Rückführungszweig (542)
aufweist,
wobei die Rollmodule (55) über einen Teil des Umfangs der Drehachse (R) verteilt sind.

8. Temporäres Haltesystem gemäß einem der Ansprüche 1 bis 7, **dadurch gekennzeichnet, daß** die rollenden Elemente (51) vom Verbindungsmodul (31) getragen werden und
daß der Rollweg (52) vom ersten Abschnitt 2a) der Hülse (2) getragen wird.

9. Schwimmende Maschine mit
- einem temporären Haltesystem gemäß einem der Ansprüche 1 bis 8 und
- einem System zum Einschlagen des im temporären Haltesystem (1) gehaltenen Grundpfahls E.

10. Verfahren zum temporären Halten eines zur Aufnahme des Masts einer Off-Shore-Windturbine bestimmten Grundpfahls (E) während des Einschlagens durch Anwendung eines temporären Haltesystems gemäß einem der Ansprüche 1 bis 8,
wobei das Halteverfahren einen Schritt des Einsetzens des Grundpfahls (E) in die Durchgangsleitung (21) der Hülse (2) aufweist,
wobei der Einsetzungsschritt
- ein Drehen des mindestens einen zweiten Abschnitts (2b) in die offene Konfiguration und
- ein Drehen der Hülse (2) gegenüber dem Verbindungsmodul (31) unter Berücksichtigung der für die seitliche Öffnung (2c) gewünschten Orientierung und, vorteilhafterweise, zum Korrigieren eventueller Bewegungen der schwimmenden Maschine
aufweist.

## Claims

1. A temporary holding system for temporarily holding, during driving operations, a foundation pile (E) intended to receive the mast of an off-shore wind turbine,
wherein said temporary holding system (1) comprises:
- a sleeve (2) delimiting a through-duct (21), intended to surround a section of said foundation pile (E) and defining a longitudinal axis (21'), advantageously a vertical longitudinal axis (21'), and
- a carrier frame (3) comprising an interface module (31) that carries said sleeve (2), and a base (32) that is intended to be secured to a floating vessel,
wherein said sleeve (2) comprises:
- a primary section (2a), assembled to said interface module (31), and
- at least one secondary section (2b), carried by said primary section (2a) and rotatable between two configurations: a closed configuration to delimit said through-duct (21), and an open configuration to clear a lateral opening (2c) for the passage of said foundation pile (E),
said interface module (31) and said primary section (2a) are assembled using bearing means (5) intended to provide said sleeve (2) with a rotational degree of freedom with respect to said interface module (31), about an axis of rotation (R) extending coaxially to said longitudinal axis (21'),
said temporary holding system (1) comprises rotating driving means (9), suitable to rotate said sleeve (2) about said axis of rotation (R),
**characterized in that** the bearing means (5) comprise at least one bearing (6, 7) comprising a contact roller bearing that contains:
- rolling elements (51), and
- a smooth raceway (52), centred on said axis of rotation (R),
the rolling elements (51) consist of cylindrical rollers (51), distributed along at least one row.

2. The temporary holding system according to claim 1, **characterized in that** the primary section (2a) extends over an angular sector from 150° to 250° about said longitudinal axis (21'),
**in that** the bearing means (5) are arranged in such a way as to allow a rotational operation of said sleeve (2) over an angular sector of at least 90° on either side of a median axis (M) passing through said longitudinal axis (21').

3. The temporary holding system according to any one of claims 1 or 2, **characterized in that** the bearing means (5) comprise:
- at least one radial bearing (6), preferably vertical, intended to receive the radial loads extending radially to said axis of rotation (R), and
- at least one axial bearing (7), preferably horizontal, intended to receive the axial loads extending parallel to said axis of rotation (R).

4. The temporary holding system according to claim 3, **characterized in that** the bearing means (5) comprise at least two radial bearings (6):
- at least one first radial bearing (61), arranged in such a way as to receive the centrifugal axial loads, and
- at least one second radial bearing (62), arranged in such a way as to receive the centripetal axial loads.

5. The temporary holding system according to claim 4, **characterized in that** said at least one radial bearing (6) comprises a radial contact roller bearing that contains:
- rolling elements (51), and
- a smooth, arc-shaped raceway (52), coaxial and parallel to said axis of rotation (R),
and **in that** said at least one axial bearing (7) comprises a contact roller bearing that contains:
- rolling elements (51), and
- a smooth, arc-shaped raceway (52), coaxial and perpendicular to said axis of rotation (R).

6. The temporary holding system according to any one of the claims 1 to 5, **characterized in that** the cylindrical rollers (51) are connected to each other to form at least one chain (54) of cylindrical rollers (51).

7. The temporary holding system according to claim 6, **characterized in that** said at least one bearing (6, 7) comprises several roller bearing modules (55) each containing at least one chain (54) of cylindrical rollers (51),
and **in that**, within each roller bearing module (55), the chain (54) of cylindrical rollers (51) forms a chain (54) of recirculating cylindrical rollers (51) that includes:
- an active strand (541) cooperating with the raceway (52), and
- a return strand (542),
wherein said roller bearing modules (55) are distributed over part of the circumference of the axis of rotation (R).

8. The temporary holding system according to any one of claims 1 to 7, **characterized in that** the rolling elements (51) are carried by the interface module (31), and
**in that** the raceway (52) is carried by the primary section (2a) of the sleeve (2).

9. A floating vessel, including:
- a temporary holding system (1) according to any one of claims 1 to 8, and
- a system for driving said foundation pile (E) held in said temporary holding system (1).

10. The method for temporarily holding, during driving operations, a foundation pile (E) intended to receive the mast of an off-shore wind turbine by implementation of a temporary holding system (1) according to any one of claims 1 to 8,
wherein the holding method comprises a step of positioning said foundation pile (E) into the through-duct (21) of said sleeve (2),
wherein said positioning step comprises:
- a rotational operation of said at least one secondary section (2b) in said open configuration, and
- a rotational operation of said sleeve (2) with respect to the interface module (31), taking into account the desired orientation of said lateral opening (2c) and advantageously to correct the possible yaw movements of the floating vessel.
